Europäisches Patentamt

European Patent Office

Office européen des brevets

(19)

(11) Veröffentlichungsnummer: **0 140 142**
**B1**

(12) # EUROPÄISCHE PATENTSCHRIFT

(45) Veröffentlichungstag der Patentschrift:
07.01.88

(51) Int. Cl.⁴: **H 04 Q 11/04, H 04 Q 3/68**

(21) Anmeldenummer: **84111257.6**

(22) Anmeldetag: **20.09.84**

(54) **Koppelfeld mit Verbindungswegeumkehr, insbesondere für Fernsprechvermittlungsanlagen.**

(30) Priorität: **23.09.83 DE 3334516**

(43) Veröffentlichungstag der Anmeldung:
**08.05.85 Patentblatt 85/19**

(45) Bekanntmachung des Hinweises auf die Patenterteilung:
**07.01.88 Patentblatt 88/1**

(84) Benannte Vertragsstaaten:
**AT CH DE FR GB IT LI NL SE**

(56) Entgegenhaltungen:
**EP - A - 0 016 396**

**PROCEEDINGS OF THE INSTITUTION OF ELECTRICAL ENGINEERS, Band 111, Nr. 12, Dezember 1964, Seiten 1976-1980, London, GB; E. WALKER et al.: "Trunking and traffic principles of a p.c.m. telephone exchange" INTERNATIONAL SWITCHING SYMPOSIUM, 25.-29. Oktober 1976, Seiten 212-4-1 - 212-4-6, Kyoto, JP; M. KARNAUGH et al.: "Design considerations for a digital swith"**

(73) Patentinhaber: **Siemens Aktiengesellschaft Berlin und München, Wittelsbacherplatz 2, D-8000 München 2 (DE)**

(72) Erfinder: **Sorgenfrei, Heiko, Dr.-Ing., Ludwig-Thoma-Strasse 13, D-8029 Sauerlach (DE)**

(56) Entgegenhaltungen: (Fortsetzung)
**THE INSTITUTION OF ELECTRICAL ENGINEERS, paper 3465E, Band 107, Teil B, Nachtrag 20, November 1960, Seiten 81-87, London, GB; P.W. WARD et al.: "The trunking of 100-channel T.D.M. exchanges" ELECTRICAL COMMUNICATION, Band 56, Nr. 2/3, 1981, Seiten 207-216, Harlow, GB; J.R. DE LOS MOZOS MARQUES et al.: "ITT 1240 digital exchange traffic handling capacity"**

## Beschreibung

Die europäische Patentschrift EP-A-0 016 396 betrifft ein Koppelfeld mit Umkehrgruppierung und dadurch gegebener Verbindungsdurchschaltung mit Verbindungswegeumkehr, insbesondere für Fernsprechvermittlungsanlagen, bei dem die Teilnehmeranschlüsse an Eingänge von Eingangsteilkoppelfeldern angeschlossen sind, und bei dem weitere Teilkoppelfelder vorgesehen sind, und bei dem die die Teilkoppelfelder einschliesslich Eingangsteilkoppelfelder verbindenden Zwischenleitungen bei jedem Teilkoppelfeld an zugehörige Eingänge gemäss Umkehrgruppierung bezüglich des betreffenden Teilkoppelfeldes selber angeschlossen sind und alle Verbindungswege daher auch innerhalb jedes der Teilkoppelfelder umkehren.

Durch die EP-A-0 016 396 ist es darüber hinaus auch bereits bekannt, in einem solchen Koppelfeld die Teilkoppelfelder als Zeitkanalkoppler auszubilden. Darüber hinaus ist es im Zusammenhang mit obengenannter Patentschrift bereits ganz allgemein bekannt, in einem Koppelfeld der genannten bekannten Art für eine über die Verbindungswege durchgeschaltete Zeitkanalverbindung Zeitkanäle hintereinander von einer entsprechenden Mehrzahl von Zeitkanalleitungen (Zwischenleitungen) zu belegen, wobei die pro Zeitkanalverbindung und jeweils pro Zeitkanalleitung belegten beiden Zeitkanäle hinsichtlich ihrer Zeitlagen einander entsprechen. Dies wird bekanntlich dadurch bewerkstelligt, dass pro Zeitkanalverbindung und jeweils pro Zeitkanalleitung immer zeitlagengleiche Zeitkanäle ausgewählt werden, wodurch sich die einer jeden Verbindungsdurchschaltung vorausgehende Wegesuche ganz erheblich vereinfacht.

Dieses Prinzip, bei der Suche nach einem mit den beiden zeitlagengleichen Kanälen einer bereits teilweise aufgebauten Zeitkanalverbindung über ein weiteres Zeitlagenkoppelvielfach zu verbindenden weiteren Paar von Zeitlagenkanälen wieder zwei zeitlagengleiche Zeitlagenkanäle zu wählen, ist durch das Dokument «Proceedings of the institution of electrical engineers», Band 111, Nr. 12, December 1964, Seiten 1976–80, bekannt. Dadurch ergeben sich in einer Anordnung dieser bekannten Art in den beiden durchgeschalteten Übertragungswegen der betreffenden im Aufbau befindlichen Zeitkanalverbindung komplementäre Zeitlagendifferenzen, das heisst, innerhalb dieses Zeitlagenkoppelvielfaches tritt in dem einen Übertragungsweg eine Zeitlagendifferenz auf, die komplementär zu der Zeitlagendifferenz in dem anderen Übertragungsweg ist in Bezug auf die Anzahl von Zeitlagen im jeweiligen Pulsrahmen.

Diese Auswahl immer von zeitlagengleichen Zeitkanälen pro Zeitkanalleitung, also pro von Teilkoppelfeld zu Teilkoppelfeld verlaufender Zwischenleitung, hat nun zur Folge, dass in einer Zeitkanalverbindung, die über die Zeitkanäle einer Mehrzahl von entsprechenden Teilkoppelfeldern verbindende Zeitkanalleitungen durchgeschaltet ist, ganz erhebliche Zeitlagenunterschiede auftreten, zwischen dem Eintreffen eines Zeitkanalsignales an dem betreffenden Koppelfeld und der Weitergabe dieses Zeitkanalsignales, wenn es das Koppelfeld wieder verlässt; dies ist gemeinsam für jeweils die beiden zu einer durchgeschalteten Zeitkanalverbindung gehörenden Übertragungswege zu sehen. Zeigt der Zeitlagenunterschied für ein Zeitlagensignal von einer Zeitkanalleitung über ein Teilkoppelfeld zu einer nächsten Zeitkanalleitung für den einen Übertragungsweg z.B. 12 aufeinanderfolgende Zeitlagendifferenzen (12 Zeitschlitzbreiten), so ergibt sich der Zeitlagenunterschied für den anderen Übertragungsweg derselben Zeitkanalverbindung innerhalb desselben Teilabschnittes dieser Zeitkanalverbindung aus der Pulsrahmendauer abzüglich der genannten 12 Zeitlagendifferenzen. Die Summe beider Zeitlagenunterschiede ist folglich immer gleich der Pulsrahmendauer. Je kleiner der Zeitlagenunterschied für den einen Übertragungsweg ist, je grösser ist zwangsläufig der Zeitlagenunterschied für den anderen Übertragungsweg. Werden für alle Teilabschnitte des einen Übertragungsweges möglichst geringe Zeitlagenunterschiede erreicht durch entsprechende Auswahl von Zeitkanälen bei der Wegesuche, so ergeben sich für den umgekehrten Übertragungsweg entsprechend grosse Zeitlagenunterschiede pro Teilabschnitt. Da diese sich summieren, kann sich für die Zeitlagensignale dieser anderen Übertragungsrichtung eine unerwünscht oder unzulässig hohe Gesamt-Zeitverzögerung ergeben.

Um den Problemen der Verzögerung von Zeitkanalsignalen bei Aufeinanderfolge einer Mehrzahl von Zeitstufen in Zeitkanalverbindungen wirksam zu begegnen, wurde in einem in der Zeitschrift «Elektrisches Nachrichtenwesen», Band 54, Nr. 3, 1979, auf den Seiten 208ff, 215ff, 227ff und 238ff beschriebenen Fernmeldevermittlungssystem vorgesehen, die beiden jeweils zu einer Verbindung gehörenden Übertragungswege unabhängig voneinander über die betreffenden Koppeleinrichtungen durchzuschalten. Diese Unabhängigkeit betrifft also die Zeitlagenauswahl und die Auswahl von Zeitkanälen für eine Zeitkanalverbindung jeweils pro Zeitkanalleitung. Diese unabhängige Wegesuche und Verbindungsdurchschaltung für die beiden Übertragungswege einer Vierdrahtverbindung entspricht im wesentlichen dem Prinzip der vierdrähtigen Verbindungsdurchschaltung, wie es bereits das deutsche Patent DE-C-2 041 052 angibt. Die in der genannten Zeitschrift beschriebene Fernmeldevermittlungsanlage macht es aber erforderlich, für jede durchzuschaltende Verbindung zwei voneinander unabhängige Wegesuchvorgänge durchzuführen, nämlich für jeden der beiden Übertragungswege einer Zeitkanalverbindung.

Die Erfindung bezieht sich nun auf ein Koppelfeld gemäss EP-A-0 016 396 mit Umkehrgruppierung und dadurch gegebener Verbindungsdurchschaltung mit Verbindungswegeumkehr, insbesondere für Fernsprechvermittlungsanlagen, bei dem die Teilnehmeranschlüsse an Eingänge von Eingangsteilkoppelfeldern angeschlossen sind, und bei dem weitere Teilkoppelfelder vorgesehen sind, und bei dem die Eingangsteilkoppelfelder sowie die weiteren Teilkoppelfelder durch Zeitkanalkoppler gebildet sind, und bei dem die die Teilkoppelfelder einschliesslich Eingangsteilkoppelfelder verbindenden Zwischenleitungen als Zeitkanalleitungen ausgebildet und bei jedem Teilkoppelfeld an zugehörige Eingänge gemäss Umkehrgruppierung bezüglich des betreffenden Teilkoppelfeldes selber angeschlossen sind, wodurch alle Verbindungswege innerhalb jedes der Teilkoppelfelder umkehren, und bei dem für eine über die Verbindungswege durchgeschaltete Zeitkanalverbindung Zeitkanäle hintereinander von einer entsprechenden Mehrzahl von Zeitkanalleitungen gelegt sind, indem die pro Zeitkanalverbindung und jeweils pro Zeitkanalleitung belegten beiden Zeitkanäle hinsichtlich ihrer Zeitlagen einander entsprechen.

Für die Erfindung besteht die Aufgabe, bei einem Koppelfeld der zuvor angegebenen Art sowohl die für die Durchschaltung von Zeitlagenverbindungen jeweils erforderliche Wegesuche und Wegeauswahl so einfach wie möglich zu gestalten, als auch dafür zu sorgen, dass der Zeitunterschied zwischen dem Zeitpunkt des Eintreffens eines Zeitlagensignales beim Koppelfeld einerseits und dem Zeitpunkt seines Verlassens des Koppelfeldes andererseits so klein ist wie möglich, und zwar für jeden der beiden Übertragungswege einer Zeitlagenverbindung.

Die Erfindung löst die gestellte Aufgabe dadurch, dass für die für den einen der beiden pro Zeitkanalverbindung durchgeschalteten beiden Übertragungswege in einer Zeitkanalverbindung liegenden Zeitkanäle einerseits und die für den anderen dieser beiden Übertragungswege in der räumlich gleichen Reihenfolge hintereinander liegenden Zeitkanäle andererseits durch die Wegesuche zwei Zeitlagenserien ausgewählt werden, in denen die Zeitlagen der beiden hinsichtlich dieser Reihenfolge einander entsprechenden Zeitkanäle für die beiden Übertragungswege, also von Zeitlagen im jeweiligen Pulsrahmen die jeweils beiden einander entsprechenden Zeitlagen aus beiden Zeitlagenserien zueinander komplementäre Zeitlagenwerte aufweisen, und dass durch die Auswahl von Zeitlagen für die Zeitkanäle für den einen Übertragungsweg in stets steigendem Sinne, jedoch in möglichst kleinen Zeitlagensprüngen von Zeitkanal nicht nur für diesen Übertragungsweg, sondern zugleich und selbsttätig auch für den anderen Übertragungsweg ein minimaler Zeitsprung für die gesamte Zeitkanalverbindung, d.h. für beide Übertragungswege gleiche Zeitsprünge erzielt wird bzw. werden.

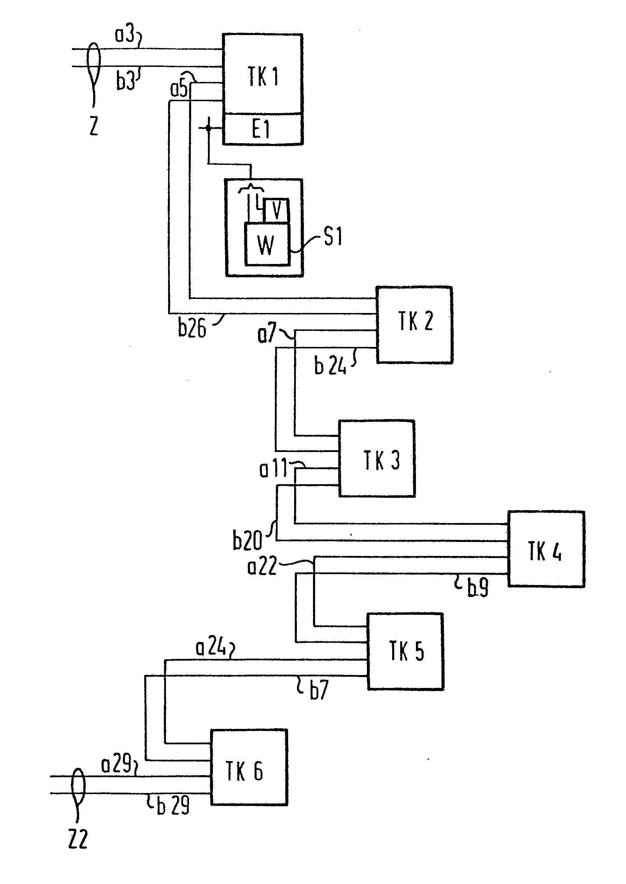

In der Zeichnung ist ein Ausführungsbeispiel der Erfindung nur in wesentlich zu ihrem Verständnis beitragenden Bestandteilen dargestellt, worauf sie jedoch keineswegs beschränkt ist. Die folgenden Erläuterungen gehen von Zeichnung und Beschreibung der Vermittlungsanlage gemäss EP-A-0 016 396 aus und bauen hierauf auf. Bereits in der EP-A-0 016 396 ist davon die Rede, dass die dargestellten und beschriebenen Teilkoppelfelder einschliesslich Eingangsteilkoppelfelder durch Zeitkanalkoppler gebildet sein können, was die vorliegende Erfindung voraussetzt. In der vorliegenden Zeichnung ist eine Anzahl von Teilkoppelfeldern TK1 bis TK6 dargestellt. Diese entsprechen den Teilkoppelfeldern und Eingangsteilkoppelfeldern gemäss EP-A-0 016 396. Die Teilkoppelfelder TK1 und TK6 mögen Eingangsteilkoppelfelder sein, während die Teilkoppelfelder TK2 bis TK5 Teilkoppelfelder anderer Art sein mögen. Bei letzteren kann es sich jedoch ebenfalls um Eingangsteilkoppelfelder handeln. Laut Figurenbeschreibung in der EP-A-0 016 396 sind die Teilkoppelfelder durch Zwischenleitungen miteinander verbunden. Hierbei handelt es sich im vorliegenden Falle also um Zeitkanalleitungen. Die verschiedenen Teilkoppelfelder sind also über Zwischenleitungen miteinander verbunden, die als Zeitkanalleitungen ausgebildet sind. Hierunter sind Zeitmultiplexleitungen zu verstehen.

Wie nun aus der Zeichnung ersichtlich ist, handelt es sich im vorliegenden Falle um ein Koppelfeld mit Umkehrgruppierung und dadurch gegebener Verbindungsdurchschaltung mit Verbindungswegeumkehr. Dieses Koppelfeld möge das Koppelfeld einer Fernsprechvermittlungsanlage sein. Teilnehmeranschlüsse sowie Verbindungsleitungen (Ortsverbindungsleitungen und Fernverbindungsleitungen) sind in nicht dargestellter Weise an Eingänge der Eingangsteilkoppelfelder TK1 und TKZ angeschlossen. Hierbei kann es sich um Analogleitungen sowie um Zeitmultiplexleitungen handeln. Soweit es sich um Analogleitungen handelt, sind sie über entsprechende, an sich bekannte Anpassungsschaltungen an die Eingangsteilkoppelfelder angeschlossen. Teilnehmerleitungen, Verbindungsleitungen und Zwischenleitungen sind bei den Teilkoppelfeldern an zugehörige Eingänge gemäss Umkehrgruppierung bezüglich des betreffenden Teilkoppelfeldes angeschlossen, wodurch alle Verbindungswege innerhalb jedes der Teilkoppelfelder umkehren. Dies wird in dem genannten EP-A-0 016 396 in allen erforderlichen Einzelheiten beschrieben.

Über die in der Zeichnung dargestellten Verbindungswege werden Zeitkanalverbindungen durchgeschaltet. In einer jeden derselben liegen Zeitkanäle hintereinander, und zwar von einer entsprechenden Mehrzahl von Zeitkanalleitungen. Zur Durchschaltung einer Verbindung werden also aus mehreren, die Teilkoppelfelder in der angegebenen Weise miteinander verbindenden Zeitkanalleitungen Zeitkanäle ausgewählt, und zwar immer je ein Zeitkanal für den einen Übertragungsweg (die eine Übertragungsrichtung) und ein Zeitkanal für den anderen Übertragungsweg (die andere Übertragungsrichtung). Jeweils für einen Übertragungsweg sind also mehrere Zeitkanäle hintereinander geschaltet, und zwar von entsprechend mehreren Zeitkanalleitungen. Dies gilt für beide Übertragungswege einer durchgeschalteten Zeitkanalverbindung. Die pro Zeitkanalverbindung und jeweils pro Zeitkanalleitung belegten beiden Zeitkanäle entsprechen einander hinsichtlich ihrer Zeitlagen. Dies wird weiter unten noch in grösserer Ausführlichkeit erläutert.

In der Zeichnung ist ausser den Teilkoppelfeldern TK1 bis TK6 von Zeitkanalleitungen jeweils ein Zeitkanal für die eine Übertragungsrichtung und ein Zeitkanal für die andere Übertragungsrichtung dargestellt. Die Zeitkanäle für die eine Übertragungsrichtung sind mit a3 bis a29 bezeichnet, während die Zeitkanäle für die andere Übertragungsrichtung mit b29 bis b3 bezeichnet sind. Dargestellt sind also die Zeitkanäle für eine durchgeschaltete Zeitkanalverbindung. Die Darstellung der Zeitkanalleitungen, die als Zwischenleitungen die Teilkoppelfelder miteinander verbinden, ist also auf Darstellung, insbesondere Bezeichnung (Zeitlagen) einz. Kanäle beschränkt.

Die in den Bezeichnungen für die Zeitkanäle a3 bis b29 verwendeten Zahlen geben zugleich die jeweilige Zeitlage des betreffenden Zeitkanales innerhalb der betreffenden Zeitmultiplexleitung an.

Es sei nun angenommen, dass die Zeitkanäle a3 und b3 sowie a29 und b29 zu zwei Zeitmultiplexleitungen gehören, die als Ortsverbindungsleitungen oder Fernverbindungsleitungen verwendet sind. Darüber hinaus können in an sich bekannter Weise auch Teilnehmerstationen zeitmultiplex angeschlossen sein – es soll nun dargestellt werden, wie das Zeitkanalpaar a3/b3 mit dem Zeitkanalpaar a29/b29 verbunden ist. Dies ist also eine Zeitkanalverbindung, die über die Teilkoppelfelder TK1 bis TK6 vermittlungstechnisch durchschaltbar ist. Wie bereits ausgeführt wurde, stellen die in den Bezeichnungen der Zeitkanäle verwendeten Zahlen die Zeitlagen dieser Zeitkanäle jeweils innerhalb der betreffenden Zeitmultiplexleitung, also bezüglich der jeweiligen Pulsrahmen dar. Es sei davon ausgegangen, dass die Teilkoppelfelder TK1 bis TK6 sowie die zeitmultiplex angeschlossenen Teilnehmerleitungen und Verbindungsleitungen taktsynchron und pulsrahmensynchron arbeiten.

Zunächst sei der in der durchgeschalteten Zeitkanalverbindung bestehende Übertragungsweg vom Zeitkanal a3 zum Zeitkanal a29 betrachtet. In diesem Übertragungsweg weisen die betreffenden Zeitkanäle die Zeitlagen 3, 7, 11, 22, 24 und 29 auf. Der Zeitunterschied zwischen einem über den Zeitkanal a eintreffenden Zeitmultiplexsignal und Weitergabe über den Zeitkanal a29 beträgt also 29 minus 3, also 27 Zeitschlitzbreiten. Es wird davon ausgegangen, dass ein Pulsrahmen insgesamt 32 Zeitschlitze umfasst, die die Zeitlagen 0 bis 31 aufweisen. Der Zeitunterschied zwischen Eintreffen und Weitergabe eines Zeitmultiplexsignales ist also kleiner als die Pulsrahmendauer.

Die in der EP-A-0 016 396 erwähnten Steuerwerke und Einstelleinrichtungen sind in der beigefügten Zeichnung mit E1 und S1 angedeutet. Auch alle übrigen Teilkoppelfelder sind in nicht dargestellter Weise mit solchen Einstelleinrichtungen und Steuerwerken ausgestattet. Die Steuerwerke dienen u.a. zur Durchführung der Wegesuche und Wegeauswahl. Hierzu sind sie mit einer an sich bekannten Wegesucheinrichtung W ausgestattet. Zur Durchschaltung von Verbindungen führt eine solche Wegesucheinrichtung Wegesuchvorgänge und entsprechende Auswahlvorgänge durch und liefert entsprechende Einstellbefehle zur Einstelleinrichtung. Die Einstelleinrichtung führt dann die entsprechenden Durchschaltungen im Koppelfeld (Teilkoppelfeld) durch. Die genannte Auswahl betrifft bei Belegung eines Kanalpaares zur Durchschaltung zu einem weiterführenden Kanalpaar auch die Auswahl eines freien solchen weiterführenden Kanalpaares. Die Wegesucheinrichtung W ist nun so eingerichtet, dass sie bei ankommender Belegung eines Kanalpaares zu dessen Verbindung mit einem weiterführenden Kanalpaar eine Auswahl dahingehend trifft, dass sie zu dem ankommend belegten Zeitkanal der einen Übertragungsrichtung einen weiterführenden Zeitkanal derselben Übertragungsrichtung mit einer solchen Zeitlage auswählt, dass diese beiden Zeitkanäle für den einen Übertragungsweg hinsichtlich ihrer Zeitlagen einen steigenden, jedoch möglichst kleinen Zeitlagensprung aufweisen. Die Wegesucheinrichtung wählt also unter den jeweils freien Zeitkanälen den im vorstehenden Sinne am besten geeigneten aus. In der gleichen Weise erfolgt eine Wegesuche und Wegeauswahl für jeden der Durchschaltevorgänge in den weiteren Teilkoppelfeldern TK2 bis TK6. Es mögen dabei die Zeitlagen ausgewählt werden, die aus der Zeichnung abzulesen sind. In dieser Weise ergeben sich für den einen Übertragungsweg die durchzuschaltenden Zeitkanalverbindung aus mehreren Wegesuchvorgängen die entsprechenden Zeitkanäle a3 bis a29, die in an sich bekannter Weise und darüberhinaus in im Hauptpatent beschriebener Weise innerhalb der Teilkoppelfelder TK1 bis TK6 miteinander verbunden werden.

Für den anderen der beiden Übertragungswege der durchzuschaltenden Zeitkanalverbindung können die einzelnen Wegesuchergebnisse mitverwendet werden. Es wurde davon ausgegangen, dass die beiden für die betreffende Zeitkanalverbindung belegten Kanäle innerhalb der Zeitmultiplexleitungen Z1 und Z2 jeweils zeitlagengleich sind, was sich aus der Entsprechung der Bezeichnungen a3 und b3 bzw. a29 und b29 ergibt. Während nun für den einen der beiden Übertragungswege Zeitlagen in stets steigendem Sinne (bei möglichst kleinen Zeitlagensprüngen von Zeitkanal zu Zeitkanal) durch die Wegesucheinrichtungen ausgewählt werden (ausgewählt werden Zeitkanäle mit entsprechenden Zeitlagen), werden für den anderen der beiden Übertragungswege der betreffenden durchzuschaltenden Zeitlagenverbindung in der räumlich gleichen Reihenfolge hintereinander liegende Zeitkanäle mit einer anderen Zeitlagenfolge ausgewählt. Pro durchzuschaltende Zeitkanalverbindung werden also für die in dem einen der beiden Übertragungswege hintereinander liegenden Zeitkanäle einerseits und für die in dem anderen Übertragungsweg in der räumlich gleichen Reihenfolge (von Z1 über TK1 bis TK6 zu Z2) hintereinanderliegenden Zeitkanäle andererseits durch die Wegesuche zwei Zeitlagenserien ausgewählt, in denen die jeweils beiden einander entsprechenden Zeitlagen aus beiden Zeitlagenserien zueinander komplementäre Zeitlagenwerte aufweisen. Hierbei sind die beiden einander jeweils ententsprechenden Zeitlagen diejenigen von zwei Kanälen, die zwischen zwei Teilkoppelfeldern liegen, z.B. a7 und b24. Durch die Auswahl von Zeitlagen für die Zeitkanäle für den einen Übertragungsweg in stets steigendem Sinne, jedoch in möglichst kleinen Zeitlagensprüngen von Zeitkanal zu Zeitkanal wird nicht nur für den einen Übertragungsweg sondern zugleich und selbsttätig auch für den anderen Übertragungsweg ein minimaler Zeitsprung für die gesamte Zeitkanalverbindung, d.h. für jeden der beiden Übertragungswege erzielt. Dies ist aus der Zeichnung leicht abzulesen. Der andere Übertragungsweg der hier behandelten durchgeschalteten Verbindung beginnt beim Zeitkanal b29 und verläuft über die Zeitkanäle b7, b9, b20, b24, b26 und b3.

Bisher wurde davon ausgegangen, dass die beiden zu einer Verbindung gehörenden und einander entsprechenden Zeitkanäle bei den Zeitmultiplexleitungen Z1 und Z2 jeweils zeitlagengleich sind. Es ist aber auch möglich, die Erfindung auch hierauf anzuwenden und die betreffenden Zeitkanäle in die erfindungsgemässe Durchschalteweise einzubeziehen. In diesem Falle müsste bei der Zeitmultiplexleitung Z1 für den genannten anderen Übertragungsweg ein Zeitkanal mit der Zeitlage b28 und bei der Zeitmultiplexleitung Z2 ein Zeitkanal mit der Zeitlage b2 ausgewählt werden. Für die Gewinnung der genannten komplementären Zeitlagenwerte ist in jedem der Steuerwerke der Wegesucheinrichtung W eine Umsetzeinrichtung V zugeordnet, mit deren Hilfe es möglich ist, aus einer jeweils für den einen der beiden Übertragungswege ermittelten Zeitlage die entsprechende komplementäre Zeitlage zu ermitteln. Bei der Wegesuche ist es jeweils erforderlich, zu überprüfen, ob die für den einen Übertragungsweg ermittelte Zeitlage und die jeweils für den anderen Übertragungsweg hieraus gewonnene komplementäre Zeitlage frei ist, d.h. es ist jeweils zu prüfen, ob die entsprechenden Zeitkanäle jeweils beide frei sind. – Im Zuge der fortgeschrittenen Weiterentwicklung der integrierten Technik stellt der Aufwand für die Erstellung von Koppelfeldern einen relativ niedrigen Anteil am Gesamtaufwand für Fernmeldevermittlungsanlagen dar. Deswegen können Koppelfelder neuerdings so reichlich bemessen werden, dass sie dementsprechend mit einem vergleichsweise niedrigen Verkehr belastet sind. Dieser Umstand kommt der Anwendung der Erfindung vorteilhaft entgegen, die sich also in Koppelfeldern mit entsprechend geringer Verkehrsbelastung mit besonderem Vorteil anwenden lässt.

## Patentanspruch

1. Koppelfeld mit Umkehrgruppierung und dadurch gegebener Verbindungsdurchschaltung mit Verbindungswegeumkehr, insbesondere für Fernsprechvermittlungsanlagen, dem die Teilnehmeranschlüsse an Eingänge von Eingangsteilkoppelfeldern (z.B. TK1, TK6) angeschlossen sind, und bei dem weitere Teilkoppelfelder (TK2–TK5) vorgesehen sind, und bei dem die Eingangsteilkoppelfelder (z.B. TK1, TK6) sowie die weiteren Teilkoppelfelder (TK2–TK5) durch Zeitkanalkoppler gebildet sind, und bei dem die die Teilkoppelfelder (TK2–TK5) einschliesslich Eingangsteilkoppelfelder (z.B. TK1, TK6) verbindenden Zwischenleitungen als Zeitkanalleitungen ausgebildet und bei jedem Teilkoppelfeld (TK2–TK5) an zugehörige Eingänge gemäss Umkehrgruppierung bezüglich des betreffenden Teilkoppelfeldes selber angeschlossen sind, wodurch alle Verbindungswege innerhalb jedes der Teilkoppelfelder (TK2–TK5) umkehren, und bei dem für eine über die Verbindungswege durchgeschaltete Zeitkanalverbindung Zeitkanäle hintereinander von einer entsprechenden Mehrzahl von Zeitkanalleitungen belegt sind, indem die pro Zeitkanalverbindung und jeweils pro Zeitkanalleitung belegten beiden Zeikanäle hinsichtlich ihrer Zeitlagen (a3/b3 ... a29/b29) einander entsprechen, dadurch gekennzeichnet, dass für die für den einen der beiden pro Zeitkanalverbindung durchgeschalteten beiden Übertragungswege (a ..., b ...) in einer Zeitkanalverbindung liegenden Zeitkanäle (a3, a5, a7, a11, a22, a24, a29) einerseits und die für den anderen dieser beiden Übertragungswege in der räumlich gleichen Reihenfolge hintereinander liegenden Zeitkanäle (b3, b26, b24, b20, b9, b7, b29) andererseits durch die Wegesuche zwei Zeitlagenserien ausgewählt werden, in denen die Zeitlagen der beiden hinsichtlich dieser Reihenfolge einander entsprechenden Zeitkanäle für die beiden Übertragungswege (a ..., b ...), also von Zeitlagen im jeweiligen Pulsrahmen die jeweils beiden einander entsprechenden Zeitlagen aus beiden Zeitlagenserien zueinander komplementäre Zeitlagenwerte aufweisen, und dass durch die Auswahl von Zeitlagen für die Zeitkanäle für den einen Übertragungsweg (a ...) in stets steigendem Sinne, jedoch in möglichst kleinen Zeitlagensprüngen von Zeitkanal zu Zeitkanal nicht nur für diesen Übertragungsweg (a ...), sondern zugleich und selbsttätig auch für den anderen Übertragungsweg (b ...) ein minimaler Zeitsprung für die gesamte Zeitkanalverbindung, d.h. für beide Übertragungswege (a ..., b ...) gleiche Zeitsprünge erzielt wird bzw. werden.

## Revendication

1. Champ de couplage à groupement de rebroussement et interconnexion de liaisons, fournie par un tel groupement, avec rebroussement des voies de liaison, notamment pour des installations de commutation téléphonique, et auquel les postes d'abonnés sont raccordés au niveau d'entrées de champs de couplage partiels d'entrée (par exemple TK1, TK6) et dans lequel il est prévu d'autres champs de couplage partiels (TK2–TK5), et dans lequel les champs de couplage partiels d'entrée (par exemple TK1, TK6) ainsi que les autres champs de couplage (TK2–TK5) sont formés par des coupleurs de canaux temporels, et dans lequel les lignes intermédiaires, qui relient les champs de couplage partiels (TK2–TK5) y compris des champs de couplage partiels d'entrée (par exemple TK1, TK6), sont réalisées sous la forme de lignes de transmission de canaux temporels et sont raccordées, pour chaque champ de couplage partiel (TK2–TK5), à des entrées associées conformément au groupement à rebroussement rapporté au champ de couplage partiel considéré, ce qui a pour effet que toutes les voies de communication à l'intérieur de chacun des champs de couplage partiels (TK2–TK5) présentent un rebroussement, et dans lequel, pour une liaison par canaux temporels interconnectée par l'intermédiaire des voies de communication, des canaux temporels sont occupés successivement par une multiplicité correspondante de lignes de transmission de canaux temporels par le fait que les deux canaux temporels, occupés pour chaque liaison par canaux temporels et respectivement pour chaque ligne de transmission de canaux temporels, se correspondent mutuellement du point de vue de leur positions temporelles (a3/b3 ... a29/b29), caractérisé en ce que d'une part pour les canaux temporels (a3, a5, a7, a11, a22, a24, a29) situés dans une liaison par canaux temporels pour les deux voies de transmission (a ..., b ...) interconnectées pour chaque liaison par canaux temporels et d'autre part pour les canaux temporels (b3, b26, b34, b20, b9, b7, b29), qui se succèdent selon la même séquence spatiale pour l'autre de ces deux voies de transmission, il se produit, grâce à la recherche des voies d'acheminement, une sélection de deux séries de positions temporelles parmi lesquelles les positions temporelles des deux canaux temporels, qui se correspondent mutuellement du point de vue de cette succession, pour les deux voies de transmission (a ..., b ...), c'est-à-dire les deux positions temporelles respectives, qui se correspondent entre elles et font partie des deux séries de positions temporelles, parmi des positions temporelles situées dans la trame respective d'impulsions possèdent des valeurs complémentaires entre elles, et que grâce au choix des positions temporelles pour les canaux temporels pour une voie de transmission (a ...) dans un sens toujours croissant, mais avec des sauts aussi faibles que possible entre les positions temporelles, d'un canal temporel à un autre, on obtient un saut temporel minimum non seulement pour cette voie de transmission (a ...), mais, simultanément et automatiquement pour l'autre voie de transmission (b ...), pour l'ensemble de la liaison par canaux temporels, c'est-à-dire que l'on obtient des sauts temporels identiques pour les deux voies de transmission (a ..., b ...).

## Claim

1. A switching network with reversed trunking and associated connection switch-through with connection path reversal, in particular for telephone exchange systems, wherein the subscriber terminals are connected to inputs of input subsidiary switching networks (e.g. TK1, TK6), and wherein further subsidiary switching networks (TK2, TK5) are provided, and wherein the input subsidiary switching networks (e.g. TK1, TK6) and the further subsidiary switching networks (TK2–TK5) are formed by time channel couplers, and wherein the intermediate lines which connect the subsidiary switching networks (TK2–TK5) including the input subsidiary switching networks (e.g. TK1, TK6) comprise time channel lines and, in each subsidiary switching network (TK2–TK5), are connected to associated inputs in accordance with the principle of reversed trunking with regard to the respective subsidiary switching network itseltf, as a result of which all the connection paths within each of the subsidiary switching networks (TK2–TK5) are reversed, and wherein, for a time channel connection switched-through via the connection paths, time channels are consecutively seized by a plurality of time channel lines in that the two time channels, seized in respect of each time channel connection and each time channel line, correspond to one another in respect of their time slots (a3, b3 ... a29, b29), characterised in that on the one hand for the time channels (a3, a5, a7, a11, a22, a24, a29) included in a time channel connection for one of the two transmission paths (a ..., b ...) switched-through in respect of each time channel connection, and on the other hand for the time channels (b3, b26, b24, b20, b9, b7, b29) arranged in series in the same spatial sequence for the other of these two transmission paths, on the basis of the path finding, two series of time slots are selected in which the time slots of the two time channels, which correspond to one another in respect of this sequence, for the two transmission paths (a ..., b ...) – thus of the time slots in the respective pulse frame, the two mutually-corresponding time slots from the two series time slots – have time slot values which are complementary to one another and that by virtue of the selection of time slots for the time channels for the first transmission path (a ...) in a constantly ascending progression, but in the smallest possible time slot jumps from time channel to time channel, not only for this transmission path (a ...) but at the same time and automatically a minimum time jump is achieved for the overall time channel connection for the other transmission path (b ...), i.e. equal time jumps are achieved for the two transmission paths (a ..., b ...).

# 1/1